(19) Europäisches Patentamt

European Patent Office

Office européen des brevets

(11) **EP 1 679 760 A1**

(12) **EUROPEAN PATENT APPLICATION**

(43) Date of publication:
**12.07.2006 Bulletin 2006/28**

(51) Int Cl.:
*H01M 10/40* (2006.01)

(21) Application number: **06000139.3**

(22) Date of filing: **04.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **11.01.2005 US 642815 P**
**15.12.2005 US 300287**

(71) Applicant: **Air Products and Chemicals, Inc.**
**Allentown, PA 18195-1501 (US)**

(72) Inventors:
• **Jambunathan, Krishnakumar**
**Macungie, PA 18062 (US)**
• **Dantsin, Gennady**
**Allentown, PA 18104 (US)**
• **Casteel Jr., William Jack**
**Emmaus, PA 18049 (US)**
• **Ivanov, Sergei Vladimirovich**
**Schnecksville, PA 18078 (US)**

(74) Representative: **Kador & Partner**
**Corneliusstrasse 15**
**80469 München (DE)**

(54) **Electrolytes, cells and methods of forming passivation layers**

(57) Electrolytes having a second cycle reduction current that is less than that of the first cycle. The electrolyte comprising a salt, which will not electrochemically passivate. A cell comprising a positive electrode, a negative electrode and an electrolyte having a second cycle reduction current that is less than that of the first cycle, said electrolyte comprising a salt, which will not electrochemically passivate. A method of forming an SEI layer in a cell comprising a positive electrode, a negative electrode and an electrolyte, said method comprising the step of overcharging the electrolyte prior to fabricating the cell, or said cell during the formation cycle.

Figure 1

**Description**

BACKGROUND OF THE INVENTION

This application claims the benefit of Provisional Application No. 60/642,815, filed January 11, 2005. The disclosure of this Provisional Application is hereby incorporated by reference.

Lithium secondary batteries, by virtue of the large reduction potential and low molecular weight of elemental lithium, offer a dramatic improvement in power density over existing primary and secondary battery technologies. Lithium secondary batteries are batteries containing metallic lithium as the negative electrode and batteries which contain a lithium ion host material as the negative electrode, also known as lithium-ion batteries. By secondary battery it is meant a battery that provides for multiple cycles of charging and discharging. The small size and high mobility of lithium cations allow for the possibility of rapid recharging. These advantages make lithium ion batteries ideal for portable electronic devices, e.g., cell phones and laptop computers. Recently, larger size lithium ion batteries have been developed and have application for use in the hybrid vehicle market.

The following patents are representative of lithium batteries and electrochemical cells:

US 4,201,839 discloses electrochemical cells based upon alkali metal-containing anodes, solid cathodes, and electrolytes where the electrolytes are closoborane compounds carried in aprotic solvents. Closoboranes employed are of the formula $Z_2BnXn$ and $ZCRBmXm$ wherein Z is an alkali metal, C is carbon, R is a radical selected from the group consisting of organic hydrogen and halogen atoms, B is boron, X is one or more substituents from the group consisting of hydrogen and the halogens, m is an integer from 5 to 11, and n is an integer from 6-12. Specifically disclosed examples of closoborane electrolytes employed in the electrochemical cells include lithium bromooctaborate, lithium chlorodecaborate, lithium chlorododecabate, and lithium iododecaborate.

US 5,849,432 discloses electrolyte solvents for use in liquid or rubbery polymer electrolyte solutions based upon boron compounds with Lewis acid characteristics, e.g., boron linked to oxygen, halogen atoms, and sulfur. A specific example of an electrolyte solution comprises lithium perchlororate and boron ethylene carbonate.

US 6,346,351 discloses secondary electrolyte systems for a rechargeable battery of high compatibility towards positive electrode structures based upon a salt and solvent mixture. Lithium tetrafluoroborate and lithium hexafluorophosphate are examples of salts. Examples of solvents include diethyl carbonate, dimethoxyethane, methylformate, and so forth. In the background, there are disclosed known electrolytes for lithium batteries, which include lithium perchlorate, lithium hexafluoroarsenate, lithium trifluoromethylsulfonate, lithium tetrafluoroborate, lithium bromide, and lithium hexafluoroantimonate electrolytes incorporated in solvents.

US 6,159,640 discloses electrolyte systems for lithium batteries used in electronic equipment such as mobile phones, laptop computers, camcorders, etc based upon fluorinated carbamates. A variety of fluorinated carbamate salts, e.g., trifluoroethyl-N, N-dimethylcarbamate is suggested.

US 6,537,697 discloses a lithium secondary battery using a nonaqueous electrolyte including lithium tetrakis (pentafluorophenyl)borate as an electrolyte salt.

(D. Aurbach, A. Zaban, Y. Ein-Eli, I. Weissman, O. Chusid, B. Markovsky, M. Levi, E. Levi, A. Schechter, E. Granot) and (S. Mori, H. Asahina, H. Suzuki, A. Yonei, K. Yokoto) describe the phenomenon of anode passivation by electrolyte reduction in lithium metal and lithium ion batteries using a carbon host anode material, and its cause of irreversible capacity loss at the graphite anode in lithium ion battery applications. In general, for graphitic carbons some reduction of both solvent and salt_occurs at the graphite surface at low potentials during charging of the cell. This forms a electrode/electrolyte interface layer, sometimes referred to as a solid electrolyte interface (SEI) layer, which in some cases is stable and prevents further capacity loss and in other cases is unstable. The layer is comprised of solvent and salt decomposition products. Use of ethylene carbonate as one of the cosolvents leads to stable passivation layers, while using high levels of propylene carbonate in the absence of ethylene carbonate leads to significant irreversible capacity loss due to exfoliation of the graphite.

US5626981 describes the use of a small amount of vinylene carbonate to improve the passivation layer formed by ethylene carbonate (EC) and EC/propylene carbonate (PC) based solvents with standard electrolyte salts. The final reversible capacity is improved slightly with this additive.

US5571635 discloses that high reversible capacity over multiple charge/discharge cycles is not obtainable in solvent systems which are predominantly propylene carbonate. Propylene carbonate, which is a desirable solvent because of its wide liquid range and high dielectric constant, gives continuous capacity fade by virtue of cointercalation/exfoliation reactions. This patent describes the use of chloroethylene carbonate as a cosolvent with propylene carbonate, which acts to form stable passivation films on crystalline graphites when used with standard electrolyte salts, such as $LiPF_6$, $LiBF_4$, lithium bis-oxalatoborate (LiBOB), $LiCF_3SO_3$, etc.. It describes the use of chloroethylene carbonate as an additive for reducing irreversible capacity loss with ethylene carbonate/propylene carbonate solvent mixtures.

The disclosure of the previously identified patents and publications is hereby incorporated by reference.

A key challenge to the reversibility of cells has been their reactivity toward the electrolyte solution components (salt and solvent) under the charging conditions. Heretofore, it has been observed that all electrolyte salts and solvents undergo some reduction at the negative electrode during at least the initial charging step. This reduction can either lead to a stable, conducting passivation layer or film also referred to as a Solid Electrolyte Interface or SEI layer, or reduction can continue with charge/discharge cycling eventually leaving no reversible capacity in the negative electrode.

BRIEF SUMMARY OF THE INVENTION

The present invention provides an electrolyte having a second cycle reduction current in Cyclic Voltammetry (CV) measurements that is less than that of the first cycle, said electrolyte comprising at least one salt that will not provide any substantial electrochemically passivation (to the electrode). The CV measurements were performed on the electrolyte system in a three electrode setup (Electrochemical Methods, Allen J. Bard and Larry R. Faulkner; John Wiley & Sons, 1980 p. 213; hereby incorporated by reference). The working electrode can be a Pt or glassy carbon, the counter electrode is usually lithium foil and the reference electrode is lithium foil and is referenced as Li/Li⁺.

The invention further provides the cell described above wherein during said formation cycle of said cell, said cell is overcharged to form a compound that aids in passivation.

This invention further provides an electrolyte as described above further comprising an additive. If desired, during said formation cycle of a cell comprising said electrolyte, said cell is overcharged resulting in the formation of a compound which aids in passivation.

The invention further provides a cell comprising a positive electrode, a negative electrode and an electrolyte, said electrolyte having a second cycle reduction current in cyclic voltammetry measurements that is less than that of the first cycle, said electrolyte comprising a salt, which is not reduced in the cell environment.

The invention also provides for charging the electrolyte with or without an additive prior to fabricating the cell (and then using the treated electrolyte to fabricate a cell). The charging oxidizes at least one component of the electrolyte. If desired, the electrolyte can also be chemically oxidized by exposing the electrolyte to at least one oxidant.

This invention further provides electrolytes or cells as described above further comprising lithium.

This invention further provides electrolytes or cells comprising lithium of the formula:

$$Li_aQ$$

where Q comprises a monovalent or divalent borate or heteroborate cluster anion, a may be 1 or 2.

BRIEF DESCRIPTION OF THE DRAWINGS

Figure 1 shows the cell capacity (Ah) vs the cycle number for an electrolyte (and cell) of this invention vs a comparative electrolyte (and cell).

Figure 2 shows the cell capacity (Ah) vs the cycle number for electrolytes (and cells) of this invention made by the method of Examples 17-22 vs a comparative electrolyte (and cell) made by a comparative method.

Figure 3 shows the cell capacity (Ah) vs the cycle number for electrolytes (and cells) of this invention made by the method of Examples 23-24 vs a comparative electrolyte (and cell) made by a comparative method.

CROSS REFERENCE TO RELATED PATENTS AND PATENT APPLICATIONS

The instant invention is related to US Patent Application Nos. 10/655,476, filed September 04, 2003; 10/910, 529, filed August 03, 2004; 10/924,293, filed August 23, 2004; 11/097,810, filed August 01, 2005 and U.S. Patent No. 6,781,005. The disclosure of the previously identified patents and patent application is hereby incorporated by reference.

DETAILED DESCRIPTION OF THE INVENTION

A secondary battery cell a battery having a full charge potential typically greater than 2 V and capable of multiple cycles of charging and discharging, is dependent on an electrolyte carrying ions. The term electrolyte alone will refer to an electrolyte salt, electrolyte salt in a solvent or an electrolyte salt in a polymer or gel. Electrolyte salts and solutions for such cells should provide : (a) a high conductivity in a non-aqueous ionizing solution, (b) chemical stability to heat (e.g., cell temperatures of at least about 50°C, typically greater than 80°C and normally at least about 100°C), stability toward hydrolysis and/or HF generation in the presence of water or alcohols, and electrochemical cycling over a wide potential range (e.g., 3 to 3.6V, usually 3 to 4.2 V and typically 3 to at least about 4.2V) and/or (c) an ability of the electrolyte and/or additives therein to form a stable, passivating ion conducting interfacial or SEI layer at the electrode/electrolyte interface.

A battery may comprise one or more electrochemical cells; however the terms battery and cell may be used interchangeably herein to mean a cell. Any reference to a voltage herein refers to voltage versus the lithium/lithium$^+$ (Li/Li$^+$) couple.

The electrolyte of this invention comprises a salt that is not reduced and/or will not provide electrochemical passivation (passivation is achieved in the instant invention by the employing the compositions and methods described herein). Electrochemical passivation is a process which results in the formation of a film on the electrode surface, and thus reduces the reduction current in the second CV cycle compared to the reduction current of the first CV cycle. If passivation does not occur then the second CV cycle will be the same or higher than the first CV cycle.

The salt can be any salt or mixture of salts. In one embodiment, the salt comprises lithium. In another embodiment, the salt comprises a lithium salt of the formula:

$$Li_aQ$$

where Q comprises a monovalent or divalent borate or heteroborate cluster anion, and a is 1 or 2. The group Q comprises at least one member selected from the following borate (i) and heteroborate (ii and iii) anions:

i) The *closo-borate* anion compositions of formula $(B_nZ_n)^{2-}$, where Z comprises F, H, Cl, Br, and/or (OR), where R comprises H, C1-8, preferably $C_{1-3}$ alkyl or fluoroalkyl, and n is 8 to 12. The compositions are polyhedral clusters consisting of eight to twelve boron atoms where each boron is attached as defined to a hydrogen, a halogen atom or hydroxyl group.

ii) The *closo*-ammonioborate anion compositions of formula:

$$((RR'R''R''')NB_nZ_{n-1})^{1-} ;$$

where N is bonded to B and each of R', R'', and R''' is independently selected from the group consisting of hydrogen, alkyl, aryl and/or a polymer, Z comprises F, H, Cl, Br, and/or (OR), where R comprises H, alkyl, fluoroalkyl or aryl; and n is 8 to 12. These anion compositions are also polyhedral boron clusters of 8 to 12 boron atoms, where one of the boron atoms is attached to an ammonia group (NR'R''R'''), with F, H, Cl, Br and OR groups attached to the remaining boron atoms. A description of these compositions may be found in US 6,335,466 B1; incorporated herein by reference. The alkyl, and fluoroalkyl groups may be branched, cyclic or straight-chained groups having 1 to 20 carbon atoms, and if fluorinated may have 1 to 42 fluorine atoms. The term aryl refers to aromatic ring systems, usually containing 5 to 20 ring atoms. Polymers can comprise at least one member selected from the group consisting of polystyrene, polyethylene, polyethylene glycol, among others, which allow the anions to be bound to a polymeric support.

iii) The *closo*-monocarborate anion compositions of formula: $(R''''CB_nZ_n)^{1-}$, where R'''' is bonded to C and selected from the group consisting of hydrogen, alkyl, cycloalkyl, aryl, and a polymer; Z comprises F, H, Cl, Br, and/or (OR), where R comprises H, alkyl or fluoroalkyl; and n is 7 to 11. These fluorinated *closo-monocarborate* anion compositions are also polyhedral clusters that comprise 7-11 boron atoms and a single carbon atom. Such anion compositions are described in US 6,130,357; incorporated herein by reference. The alkyl, and fluoroalkyl groups may comprise branched, cyclic or straight-chained groups having 1 to 20 carbon atoms, and if fluorinated will have 1 to 42 fluorine atoms. The term aryl refers to aromatic ring systems, typically containing 5 to 20 ring atoms. Polymers comprise at least one member selected from the group consisting of polystyrene, polyethylene, polyethylene glycol, among others, which allow the anions to be bound to a polymeric support.

Examples of lithium salts that can comprise the electrolyte salt of this invention are lithium fluoroborates represented by the formulas:

$$Li_2B_{10}F_xZ_{10-x}$$

and

$$Li_2B_{12}F_xZ_{12-x}$$

wherein x is at least 1, or at least 3 for the decaborate salt, or at least 5, or at least 8, for the dodecaborate salts. Z represents H, Cl, Br, or OR, where R = H, $C_{1-8}$, typically $C_{1-3}$ alkyl or fluoroalkyl. Useful compounds are $Li_2B_{12}F_{12}$, and

mixtures of $Li_2B_{12}F_xZ_{12-x}$ where x is 6, 7, 8, 9, 10, 11 and 12.

Specific examples of lithium fluoroborate compounds comprise at least one member selected from the group consisting of $Li_2B_{12}F_{8-12}Z_{0-4}$ where Z comprises Cl, Br, or OR where R comprises $C_{1-8}$, usually $C_{1-3}$. Typically, the salts comprise at least one member selected from the group consisting of $Li_2B_{10}F_{10}$, $Li_2B_{12}F_{12}$, $Li_2B_{12}F_{10-12}(OH)_{0-2}$, $Li_2B_{12}F_{10-12}(Cl)_2$, $Li_2B_{12}F_{8-10}(H)_{0-2}$, $Li_2B_{12}F_{8-12}(OCF_3)_{0-4}$, and $Li_2B_{10}F_{8-10}Br_{0-2}$.

The electrolyte further comprises a solvent or carrier, referred to collectively as solvent, to provide an electrolyte solution. The solvent or carrier may be an aprotic solvent. Typically, these aprotic solvents are anhydrous, forming anhydrous electrolyte solutions. By "anhydrous" it is meant that the solvent or carrier as well as the electrolyte comprises less than about 1,000 ppm water and normally less than about 500 to 100 ppm. Examples of aprotic solvents or carriers for forming the electrolyte solutions comprise at least one member selected from the group consisting of ethylene carbonate (EC), propylene carbonate (PC), dimethyl carbonate (DMC), ethyl methyl carbonate (EMC), diethyl carbonate (DEC), methyl propyl carbonate (MPC), ethyl propyl carbonate (EPC), dipropyl carbonate (DPC), bis(trifluoroethyl) carbonate, bis(pentafluoropropyl) carbonate, trifluoroethyl methyl carbonate, pentafluoroethyl methyl carbonate, heptafluoropropyl methyl carbonate, perfluorobutyl methyl carbonate, trifluoroethyl ethyl carbonate, pentafluoroethyl ethyl carbonate, heptafluoropropyl ethyl carbonate, perfluorobutyl ethyl carbonate, etc., fluorinated oligomers, dimethoxyethane, triglyme, tetraethyleneglycol, dimethyl ether (DME), polyethylene glycols, sulfones, and gamma-butyrolactone (GBL). The solvent or carrier can also comprise at least one ionic liquid. By ionic liquid it is meant any room temperature molten salt. Examples of suitable ionic liquids comprise at least one member selected from the group consisting of asymmetric tetraalkyl ammonium salts of weakly coordinating anions such as butyl-trimethylammonium tetrafluoroborate, hexyl-trimethylammonium trifluoromethanesulfonimide, N-alkylpiperidium salts of weakly coordinating anions including N-methyl piperidinium tetrafluoroborate, N-ethylpiperidinium trifluoromethane sulfonate, N-butyl piperidinium trifluoromethanesulfonimide, among others which do not contain active or reducible hydrogens in the cation of the liquid.

In another embodiment, the electrolyte of the present invention can comprise an aprotic gel polymer carrier/solvent. Suitable gel polymer carrier/solvents can comprise at least one member selected from the group consisting of polyethers, polyethylene oxides, polyimides, polyphosphazines, polyacrylonitriles, polysiloxanes, polyether grafted polysiloxanes, derivatives of the foregoing, copolymers of the foregoing, crosslinked and network structures of the foregoing, blends of the foregoing, among others, to which is added an appropriate ionic electrolyte salt. Other gel-polymer carrier/solvents can comprise those prepared from polymer matrices derived from at least one member selected from the group consisting of polypropylene oxides, polysiloxanes, sulfonated polyimides, perfluorinated membranes (Nafion™ resins), divinyl polyethylene glycols, polyethylene glycol-bis-(methyl acrylates), polyethylene glycol-bis(methyl methacrylates), derivatives of the foregoing, copolymers of the foregoing, crosslinked and network structures of the foregoing. The aprotic gel polymer carrier may contain any of the aprotic liquid carriers described in the preceding paragraph.

If the electrolyte comprises the electrolyte salt in a solution, typically the concentration of salt will be from about 0.05 to about 2 molar or from about 0.1 to about 1.2 molar, or from about 0.2 to about 0.5 molar. Higher concentrations tend to become too viscous and, the bulk conductivity characteristics of a cell using the electrolyte may be adversely affected.

The chemical stability of the salts in the electrolytes of this invention, for example, $Li_2B_{12}F_{12}$ and $Li_2B_{12}F_9H_3$, makes them desirable as electrolyte salts for battery applications may prevent their participation in reductive passivation chemistry. When standard formation charging cycle(s) are used, a stable passivation film is not formed by the salts or solutions of these salts. Formation cycle(s) are the initial charge/discharge cycle or cycles of an assembled cell designed to form the SEI layer, and otherwise conditioning the cell for use. Typically, the charge/discharge formation cycle(s) is (are) performed at a slower rate than the charge/discharge rate under the normal operating conditions of the cell. The optimum conditions of the formation cycle can be determined experimentally for each electrolyte and battery. The term formation cycle will be used herein to mean either one or more than one charge/discharge cycle to form the SEI layer. Without a stable SEI layer, the cell undergoes continual capacity fade on charging and discharging. In cyclic voltammetry (CV) experiments on these electrolytes of this invention using either glassy carbon or highly oriented pyrolytic graphite (HOPG) working electrodes relatively large reduction currents are observed on cycling the solution. Similarly large currents are observed on subsequent cycles. We have observed that any electrolytes, which give rise to this type of CV behavior typically afford relatively poor charge/discharge stability in batteries. Conversely, we have found that if electrolytes provide a CV behavior in which the second cycle reduction current observed is lower than the first, the charge/discharge cycle life of cells is improved.

In one embodiment of this invention, a passivation additive (also referred to herein as an additive), is added to the electrolyte and the second cycle reduction current observed is lower than the first. In some embodiments the ratio of the second cycle reduction current to that of the first cycle is less than or equal to about 0.88, or less than or equal to about 0.80 of the reduction current of the first cycle. Generally, the lower the reduction current, the better the corresponding performance. In some embodiments, a modification to the formation cycle also caused a change in the CV behavior such that the second cycle reduction current (e.g., observed at 0.3 V vs Li/Li$^+$), is lower than the first cycle reduction current.

In another embodiment of this invention, the electrolyte is charged prior to fabrication of a cell. Charging can comprise exposing the electrolyte to a voltage of about 4.3 to about 5.3V for a period of about 1 to about 120 minutes. Such charging can cause partial oxidation of at least one component of the electrolyte (e.g., without wishing to be bound by any theory, it is believed that $Li_2B_{12}F_8H_4$ and other fluorinated $B_{12}$ salts can be oxidized to form $LiB_{12}F_8H_4$ and similarly oxidized analogues of the other fluorinated $B_{12}$ salts). Partial oxidation of the electrolyte, in the absence of additives, can cause a charge of the CV behavior such that the second cycle reduction current observed is lower than the first cycle reduction current.

In one embodiment of this invention, the electrolyte further comprises an additive to aid passivation layer (SEI layer) formation. The additive can function to form a stable passivation layer. We have determined that an additive, which provides a cyclic voltammagram vs $Li/Li^+$ in which the second cycle reduction current at 0.3 V is less than the first, will form a more stable SEI layer than the electrolyte of this invention, without an additive. The passivation layer may contain reduction products of the solvent, and/or additive, and/or electrolyte salt. The additive will typically be an organic material, inorganic salt or mixtures thereof.

Additives that are organic compounds that can function to form the passivation layer can comprise at least one member selected from the group consisting of chloroethylene carbonate, vinylene carbonate (VC), vinylethylenecarbonate (VEC), and non-carbonate species such as ethylene sulfite, propane sulfone, propylene sulfite, as well as substituted carbonates, sulfites and butyrolactones, such as phenylethylene carbonate, phenylvinylene carbonate, catechol carbonate, vinyl acetate, vinylethylene carbonate, dimethyl sulfite, fluoroethylene carbonate, trifluoropropylene carbonate, bromo gamma-butyrolactone, fluoro gamma-butyrolactone, among others which provide organic salts on reduction at the at least one electrode, particularly the negative electrode.

Additives that are inorganic compounds or salts that may be useful in this invention can comprise at least one compound containing boron, phosphorous, sulfur or fluorine, among others. Additives that are useful in this embodiment of the invention can comprise at least one member selected from the group consisting of lithium hexafluorophosphate ($LiPF_6$), lithium bis-oxalatoborate (LiBOB) and other chelato-borate salts (e.g., Li difluorooxalatoborate, $LiBF_2(C_2O_4)$, Li$(C_2O_3CF_3)_2$, $LiBF_2(C_2O_3CF_3)$, and $LiB(C_3H_2O_3(CF_3)_2)_2$ as described in US Patent No. 6407232, EP 139532B1 and JP2005032716 A ; hereby incorporated by reference), lithium perchlorate ($LiClO_4$), lithium hexafluoroarsenate ($LiAsF_6$), lithium trifluoromethanesulfonate ($LiCF_3SO_3$), lithium trifluoromethanesulfonimide ($Li(CF_3SO_2)_2N$, lithium tetrafluoroborate ($LiBF_4$), lithium tetrachloroaluminate (LiClO4), and lithium hexafluoroantimonate ($LiSbF_6$). Additional inorganic additives can comprise $CO_2$, which in a lithium-containing electrolyte forms $Li_2CO_3$ and $SO_2$, which can eventually forms $Li_2S$ in the SEI layer. Similarly phosphate and borate esters as inorganic additives may be reduced to form lithium alkyl phosphate(borate) salts similar to those formed by $LiPF_6$ and $LiBF_4$, respectively. Without wishing to be bound by any theory or explanation, it is believed that the hydrolytic stability of the electrolyte salts, for example the borate cluster salts, even suggest that a small amount of water could be used as the passivating additive in electrolyte solutions; however, the $H_2$ generation may disrupt SEI layer formation.

For a lithium containing electrolyte, the passivation layer (SEI layer) formed by the additives listed herein may comprise lithium alkyl carbonates and $Li_2CO_3$ (from the electrolyte solvent/organic additive reduction), LiF (arising from hydrolyzable electrolyte salts such as $LiPF_6$, $LiBF_4$, $LiAsF_6$ and $LiSbF_6$), and salt reduction products, such as $Li_xAsF_y$ (as a reduction product of $LiAsF_6$), $Li_xPF_y$ (as a reduction product of $LiPF_6$), $Li_xBF_y$ (as a reduction product of $LiBF_4$), $LiBO_xR$ (as a reduction product of the bis-oxalatoborate or LiBOB salts), $Li_2SO_3$, $Li_2S$, and $Li_2O$ (as reduction products of $LiCF_3SO_3$ and $LiN(CF_3SO_2)_2$) and LiCl and $Li_2O$ (as reduction products of $LiClO_4$).

We have discovered that any additive, which provides a cyclic voltammagram of a borate cluster-based electrolyte vs $Li/Li^+$ in which the second cycle reduction current is less than the first, will be effective. When such a condition is met, then stable, electrolyte salts, such as, lithium borate cluster salts can be used in batteries, with improved performance. However, the best performance is achieved when the reduction current of electrolyte of this invention (with an additive or made by the method of this invention) is lower than the reduction current of electrolyte.

The additive should be present in the electrolyte in an amount which forms an effective SEI layer. In some embodiments, the additive may be present in an amount between about 0.1 and about 5 % of the total weight of the electrolyte to be effective.

The battery or cell of this invention comprises any negative electrode and positive electrode, and the electrolyte of this invention. In one embodiment, the positive and negative electrodes of the battery are any using lithium containing materials, or materials that are capable of "hosting" ions in reduced or oxidized form, such as lithium. "Hosting" means that the material is capable of reversibly sequestering the ions, for example, lithium ions. The negative electrodes for the batteries of this invention can comprise at least one member selected from the group consisting of lithium metal, carbonaceous materials, such as amorphous carbon or graphites (natural or artificial), tin oxide, silicon, or germanium compounds or metal oxides or derivatives of those materials (e.g., lithium titanate). The positive electrodes for use in batteries of this invention may be based upon a lithium composite oxide with a transition metal such as cobalt, nickel, manganese, mixtures thereof, among others, or a lithium composite oxide, part of whose lithium sites or transition metal sites is replaced with at least one member selected from the group consisting of cobalt, nickel, manganese, aluminum, boron, magnesium, iron, copper, or the like, or iron complex compounds such as ferrocyan blue, or berlin green. Specific examples of lithium composites for use as positive electrodes comprise at least one of lithium iron phosphate, LiFePO4, $LiNi_{1-x}Co_xO_2$ and lithium manganese spinel, $LiMn_2O_4$.

The separator for the lithium battery can comprise a microporous polymer film. Examples of polymers for forming films comprise at least one member selected from the group consisting of nylon, cellulose, nitrocellulose, polysulfone, polyacrylonitrile, polyvinylidene fluoride, polypropylene, polyethylene, polybutene, mixtures thereof, among others. Ceramic separators, based on silicates, aluminio-silicates, and their derivatives, among others, may also be used. Surfactants may be added to the separator or electrolyte to improve electrolyte wetting of the separator. Other components or compounds known to be useful in electrolytes or cells may be added.

In one embodiment, the battery is comprised of a carbonaceous lithium ion hosting negative electrode, a positive electrode, a separator, and a lithium-based electrolyte salt carried in an aprotic solvent, gel polymer or polymer matrix. Examples of carbonaceous negative electrodes include graphites.

In a second embodiment of this invention it was determined that an SEI layer could be formed in a battery of this invention if the electrolyte salt of this invention is overcharged during the formation cycle. "Overcharging" during the formation cycle means that the voltage across the cell is gradually increased (e.g., linearly), to the point at which the electrolyte salt begins to reversibly oxidize, meaning that at least a portion of the electrolyte salt reversibly oxidizes. The overcharge point may be about 0.1 to about 1.5V above the full charge potential of the cell, and is evidenced by a plateauing of the cell voltage during the formation charging (increased charging) of the cell. Stated differently, the desired overcharge point is when the voltage no longer increases with charging. Note, for safety, the cell should not be charged at such a rate that the potential reached is much greater than about 1 volt above the full charge potential of the cell. Additionally, if during the formation cycle the cell is charged at too high a rate, then the potential will not plateau and the cell could be irreversibly damaged. It is normally useful to maintain the cell overcharging for longer periods of time at a slower charging rate, rather than the converse.

Partial oxidation of the electrolyte of this invention can be performed electrochemically by applying a current or potential or both. If a current is applied then the current should be such that the resulting potential is equal to or above the oxidation potential of the electrolyte. If a potential is applied, then the potential should be equal to or above the oxidation potential of the electrolyte. The potential may be between 4.0 V and 5.0 V vs Li/Li$^+$ or typically between 4.2 V and to 4.8 V vs Li/Li$^+$. The electrochemical partial oxidation may be carried out at temperatures between 0 C and 130 C or usually between 20C and 80C for a sufficient period of time enough to partially oxidize specific amount of electrolyte to achieve improved performance of cells using electrolytes of this invention. The current density should be between 0.01 mA cm$^{-2}$ and 25 mA cm$^{-2}$, usually between 0.01 mA cm$^{-2}$ and 5 mA cm$^{-2}$ and typically between 0.01 mA cm$^{-2}$ and 2 mA cm$^{-2}$

In another embodiment, improved CV behavior was observed with borate cluster electrolyte when the electrolyte was partially oxidized either electrochemically (e.g,. above about 4.3 V vs. Li), or by a chemical oxidant of equivalent potential. While any suitable chemical oxidant can be employed, examples of such oxidants comprise at least one member selected from the group consisting of nitrosonium tetrafluoroborate, nitrosyl hexafluorophosphate, xenon difluoride, fluorine and fluoroxy compounds such as fluoroxytrifluoromethane. The amount of chemical oxidant will normally range between about 0.001 mole equivalents to about 1 mole equivalents, and usually between 0.01 and 0.1 mole equivalents.

The modified formation procedure, which includes an overcharge step will provide improved passivation with or without the addition of additives. In one embodiment, improved CV behavior is observed with borate cluster electrolyte, in the absence of additives, when a glassy carbon working electrode is exposed to a borate cluster based electrolyte solution, which has been previously charged to its reversible oxidation limit vs Li/Li$^+$ (typically 4.3 to 4.7V) which is an overcharge voltage for the cell. The improved CV behavior is indicated by the second cycle reduction current at 0.3V vs Li/Li$^+$ being lower than that of the first cycle reduction current. In light of this, cells containing borate cluster electrolytes in standard apolar solvents were charged (e.g., linearly at constant current/constant voltage conditions), to the point at which the salts began to reversibly oxidize during their formation cycles. Such cells showed improved charge/discharge life over those using formation charge cycles of similar rate, which were not overcharged and therefore did not reach the oxidation potential of the electrolyte salt. The overcharging during the formation cycle may occur for about 0.5 to about 20 hours at about 0.1C to about 10C rate, or about 1 to about 5 hours at about 0.2C to about 1C rate.

Without intending to be bound by theory or explanation, it is believed that this improved passivation on overcharge arises from unique electrochemistry of the electrolyte salts. These salts have an intrinsic ability to provide overcharge protection through the formation of a radical anion that participates in a redox shuttle during overcharge. We believe that this radical anion interacts with organic solvent reduction product at the anode (such as $(CH_2OCO_2Li)_2$) releasing $CO_2$ gas. $CO_2$ has been known to form $Li_2CO_3$ via reduction on the electrode and $Li_2CO_3$ is reported to be a good SEI layer. Thus, it is believed that the $CO_2$ released during overcharge passivates the electrodes.

Thus, additives used alone or with overcharging the electrolyte or the cell during the formation cycle can be used to improve the performance of cells using electrolytes of this invention provided the additives and the overcharge step provides a drop in the reduction current of the electrolyte solution between the first and second CV scans. Additionally, a lower absolute reduction current on the second scan correlates well with lower irreversible capacity losses in the actual cells using the electrolyte.

The following examples are intended to illustrate various embodiments of the invention and do not limit the scope of the claims appended hereto.

EXAMPLES

Comparative Example 1

CV of $Li_2B_{12}F_{12}$ in EC:DEC

In a dry box, a non aqueous electrolyte solution was prepared with 0.4 M $Li_2B_{12}F_{12}$ dissolved in a mixed solvent system consisting of ethylene carbonate (EC) and diethylcarbonate (DEC) in a 3 to 7 ratio by weight. Cyclic voltammetry (CV) was carried out in this electrolyte solution using a CHP Instruments 660a electrochemical workstation with a glassy carbon working (positive) electrode (Bioanalytical Systems, Inc. - MF2012) and lithium wire (FMC) counter (negative electrode) and lithium metal reference electrodes at a scan rate of 10 mV/s. Table 1 shows the result of this Comparative Example. The reduction current at 0.3 V increased in the second cycle, probably due to continuous reduction of the electrolyte solution. This indicates that the 0.4 M $Li_2B_{12}F_{12}$ in EC/DEC (3/7) electrolyte solution did not significantly passivate the glassy carbon electrode during the two CV scans at 10 mV/s.

Comparative Example 2

CV of $Li_2B_{12}F_9H_3$ in EC:DEC

Comparative Example 1 was repeated except $Li_2B_{12}F_9H_3$ was used instead of $Li_2B_{12}F_{12}$. Table 1 shows the result of this Comparative Example. The reduction current at 0.3 V increased in the second cycle, indicating that the 0.4 M $Li_2B_{12}F_9H_3$ in EC/DEC (3/7) electrolyte solution, did not significantly passivate the glassy carbon electrode.

Example 3

CV of $Li_2B_{12}F_9H_3$ + $LiPF_6$ in EC:DEC

Comparative Example 2 was repeated, except that 1 wt% of $LiPF_6$ was added to the electrolyte solution. Table 1 shows the result of this Example. The reduction current in the second scan was lower compared to the first scan. Moreover, the reduction current was lower than the reduction current obtained in 0.4 M $Li_2B_{12}F_9H_3$/EC/DEC solution without any additives (Comparative Example 2). Therefore, $LiPF_6$ as an additive to the electrolyte will provide lower irreversible capacity and higher discharge capacities.

Example 4

CV of $Li_2B_{12}F_9H_3$ + $LiBF_4$ in EC:DEC

Comparative Example 2 was repeated, except that 3 wt% $LiBF_4$ was added to the electrolyte solution. Table 1 shows the result of this Example. The reduction current was lower in the second cycle, indicating that the $Li_2B_{12}F_9H_3$ + $LiBF_4$ in EC/DEC (3/7) electrolyte solution passivated the glassy carbon electrode. Therefore, $LiBF_4$ as an additive to the electrolyte provides lower irreversible capacity and higher discharge capacities.

Example 5

CV of $Li_2B_{12}F_9H_3$ + VC in EC:DEC

Comparative Example 2 was repeated, except that 3 wt% VC was added to the electrolyte solution. Table 1 shows the result of this example. The reduction current decreased in the second cycle at 0.3V, indicating passivation after the first cycle.

Example 6

CV of $Li_2B_{12}F_9H_3$ + VEC in EC:DEC

Comparative Example 2 was repeated, except that 5 wt% VEC was added to the electrolyte solution. Table 1 shows the result of this Example. The reduction current decreased in the second cycle at 0.3 V, indicating passivation after the first cycle.

Example 7

CV of $Li_2B_{12}F_9H_3$ + LiBOB in EC:DEC

Comparative Example 2 was repeated, except that 5 wt% LiBOB was added to the electrolyte solution. Table 1 shows the result of this experiment. The reduction current is lower in the second cycle at 0.3 V, indicating that the $Li_2B_{12}F_9H_3$ + LiBOB in EC/DEC (3/7) electrolyte solution passivates the glassy carbon electrode better than $Li_2B_{12}F_9H_3$ alone.

Example 8

Prepassivation using $LiPF_6$ solution

A glassy carbon working electrode was passivated by performing cyclic voltammetry experiments (3 scans) at 10 mV/s in the 4 - 0.2 V potential region in an EC/DEC (3/7) solution containing 1.0 M $LiPF_6$, using a lithium wire counter and reference electrodes as described in the previous examples. The prepassivated working electrode was then washed to remove any adsorbed electrolyte and transferred to a cell containing 0.4 M $Li_2B_{12}F_{12}$ in EC/DEC (3/7), and no passivation additive. CV was repeated as above in the 4-0.2 V potential region at 10 mV/s to confirm that the prepassivation performed in $LiPF_6$ solution was stable. The prepassivation layer of the electrode was stable in the electrolyte having no additive, and the reduction current decreased with respect to that of the original scan at 0.3 V. The results are shown in Table 1.

Example 9

CV of $Li_2B_{12}F_{12}$ in EC:DEC after exposure of working electrode to $Li_2B_{12}F_{12}$ oxidation product by an overcharge step

A cyclic voltammetry experiment was performed using polished glassy carbon as the working electrode in a 0.4 M $Li_2B_{12}F_{12}$ and EC/DEC (3/7) solution. Li was used as the counter and reference electrodes. The potential was swept between 4.0-0.2 V for a total of 3 cycles at 10 mV/s to create the limited passivation afforded by a borate cluster salt solution without additives on the glassy carbon electrode. Then the glassy carbon electrode was used as the counter electrode, and a Pt disk electrode was used as the new working electrode. The glassy carbon counter electrode was placed very close to the Pt working electrode. Li was used as the reference electrode. A current density of 3.75 mA/cm$^2$ (to overcharge the cell) was passed through the cell to oxidize a portion of the $Li_2B_{12}F_{12}$ salt to form the radical anion. Under these conditions, the glassy carbon electrode was exposed to and partially reacted with oxidizing radical anions diffusing from the nearby working electrode. It is believed that $CO_2$ was released as the result of a chemical/electro-chemical reaction, and this $CO_2$ was further reduced on the glassy carbon counter electrode to form $Li_2CO_3$, an effective SEI layer component. When the glassy carbon electrode was again used as the working electrode with lithium metal as the counter and reference electrodes and cyclic voltammetry was performed in a fresh $Li_2B_{12}F_{12}$ solution, the reduction current at 0.3V was significantly lower than in the original scans. The glassy carbon electrode was passivated by the overcharging step evidenced by the low currents recorded in Table 1.

Example 10

CV of $Li_2B_{12}F_9H_3$ in EC: DEC after exposure of the working electrode to $Li_2B_{12}F_9H_3$ oxidation product

Example 9 was repeated except that 0.4 M $Li_2B_{12}F_9H_3$ in EC:DEC (3/7) was used instead of $Li_2B_{12}F_{12}$ in EC: DEC (3/7) at a scan rate of 10 mV/s. Table 1 shows the results. The electrode that was subjected to the overcharge step yielded a lower reduction current indicating improved passivation.

Table 1

| | Current µA @ 0.3 V | | | |
|---|---|---|---|---|
| Example | 1SCAN | 2SCAN | RATIO | RATIOx1SCAN |
| Comparative 2 | 13 | 17 | 1.31 | 22.23 |
| Comparative 1 | 12 | 16 | 1.33 | 21.33 |
| 6 | 33 | 29 | 0.88 | 25.48 |
| 5 | 26 | 21 | 0.81 | 16.96 |
| 4 | 12 | 10 | 0.83 | 8.33 |
| 7 | 7 | 6 | 0.86 | 5.14 |
| 3 | 5 | 3 | 0.60 | 1.80 |
| 8 | 5.5 | 2.5 | 0.45 | 1.13 |
| 9 | 7 | 3 | 0.43 | 1.29 |
| 10 | 20 | 5.5 | 0.27 | 1.49 |

Examples 1-7 summarized in Table 1 show the impact of inorganic, organic and absence of additives on the reduction currents, determined by cyclic voltammetry of electrolyte solutions vs Li/Li$^+$. Reducible inorganic salt additives result in a significant drop in reduction current between the first and second CV scans and the lowest absolute reduction currents. The electrolytes with the organic additives added showed a decrease in reduction current indicating passivation. The comparative examples with no additives had an increase in reduction current in the second cycle typically predicting poor cell performance.

Example 8 showed that a stable prepassivation layer could be formed, and that the electrode with the stable prepassivation layer could provide benefits to a cell having an electrolyte without an additive. Examples 9, 10 show that the reaction of oxidizing species resulting from partial oxidation of the electrolyte either chemically or electrochemically at potentials greater than 4.2V vs. Li can passivate an electrode. These oxidizing species, when contacted with the electrode immersed in the electrolyte solution result in a significant drop in reduction current between the first and second CV scans and low absolute reduction currents. Thus the products of the partial oxidation of these electrolytes function as passivation additives added to the electrolytes.

Example 11

Preparation and Testing of Cell: GDR(-)//0.4M $Li_2B_{12}F_9H_3$ and 1 wt% $LiPF_6$ in 3:7 EC:DEC//GEN2(+)

*Preparation of Electrolyte*

A non-aqueous solvent was prepared by mixing ethylene carbonate (EC) and diethyl carbonate (DEC) in a weight ratio of 3:7. $Li_2B_{12}F_9H_3$ was dissolved to a concentration of 0.4M to prepare the electrolyte. Subsequently an additive $LiPF_6$ in 1 wt% was added to the electrolytic solution.

*Preparation of Lithium Secondary Battery and Measurement of Battery Characteristics*

A coin type battery cell (diameter 20 mm, thickness 3.2 mm) consisting of a positive electrode, negative electrode, separator and electrolyte was prepared at room temperature. The positive electrode, referred to as GEN2, consisted of $LiCo_{0.8}Ni_{0.15}Al_{0.05}O_2$ (cathode active material) 84% by weight, carbon black (conducting agent) 4% by weight, SFG-6 graphite (conducting agent) 4% by weight, and polyvinylidene fluoride (binder) 8% by weight on an aluminum foil current collector. The negative electrode, referred to as GDR, consisted of MAG-10 graphite (anode active material) 92% by weight, and polyvinylidene fluoride (binder) 8% by weight on a copper foil current collector. Celgard™ 3501 (available from Celgard Inc.), a microporous polypropylene film, was used as the separator.

The cell was charged by a constant current of 0.1 mA (C/20) to a voltage of 4.1V followed by a discharge current of 0.1 mA (C/20) to 3V. This cycling was repeated a second time. The cell was then charged by a constant current of 0.7 mA (C/3) to a voltage of 4.1 V followed by a discharge current of 0.7 mA (C/3) to 3V.

Table 2 summarizes the coulomb efficiency of the cell during the 3 initial charge/discharge formation cycles. The initial coulomb efficiency (charge out/charge in), which directly relates to the irreversible capacity loss at the first charging, was 81 %. Upon subsequent cycling, the coulomb efficiency for the second cycle was 100% indicating that an adequate passivation layer was formed. Upon subsequent cycling at a higher C/3 rate (0.7 mA) the coulomb efficiency was 90% indicating that this cell had good rate performance. Discharge Capacity Retention is calculated by dividing the C/3 discharge capacity by the C/20 discharge capacity, and was 88% for this additve in the cell. In most cases, the higher the Discharge Capacity Retention the better the cell performance.

Comparative Example 12

Preparation and Testing of Cell: *GDR(-)// 0.4M Li$_2$B$_{12}$F$_9$H$_3$ 3:7 EC:DEC//GEN2(+)*

The same procedure was followed as in Example 11; however, no LiPF$_6$ was added. The initial coulomb efficiency, which directly relates to the irreversible capacity loss at the first charging, was 76%. Upon subsequent cycling, the coulomb efficiency for the second cycle was 97%, a small decrease from the previous example. The coulomb efficiency from the third higher rate C/3 cycle was 90% comparable to the previous example. The Discharge Capacity Retention was 87%.

Example 13

Preparation and Testing of Cell: *GDR(-)// 0.4M Li$_2$B$_{12}$FgH$_3$ and 3 wt% LiBF$_4$ in 3:7 EC:DEC//GEN2(+)*

The same procedure was followed as in Example 11, however, a different additive LiBF$_4$ was added in 3% by weight to the electrolyte solution. The initial coulomb efficiency, which directly relates to the irreversible capacity loss at the first charging, was 81 %. Upon subsequent cycling, the coulomb efficiency for the second cycle was 98%. The coulomb efficiency from the third higher rate C/3 cycle was 94% indicating an improved performance benefit of this additive. The Discharge Capacity Retention was 90%.

Example 14

Preparation and Testing of Cell: *GDR(-)// O.4M Li$_2$B$_{12}$FgH$_3$ and 5 wt% VEC in 3:7 EC:DEC//GEN2(+)*

The same procedure was followed as in Example 11; however, a different additive 5% by weight VEC was added to the electrolyte solution. The initial coulomb efficiency, which directly relates to the irreversible capacity loss at the first charging, was 67% indicating a significant capacity loss for the cell. Upon subsequent cycling, the coulomb efficiency for the second cycle was 95% indicating that the passivation layer was still forming on the second cycle. The coulomb efficiency from the third higher rate cycle was 72% indicating a loss in rate performance for this additive. The Discharge Capacity Retention was 57%, indicating a loss in performance.

Example 15

Preparation and Testing of Cell: *GDR(-)// 0.4M Li$_2$B$_{12}$F$_9$H$_3$ and 3 wt% LiBOB in 3:7 EC:DEC//GEN2(+)*

The same procedure was followed as in Example 11; however, a different additive lithium bis-oxalatoborate, or LiBOB, was added in 3% by weight to the electrolyte. The initial coulomb efficiency, which directly relates to the irreversible capacity loss at the first charging, was 79%. Upon subsequent cycling, the coulomb efficiency for the second cycle was 100% indicating that an adequate passivation layer was formed. Upon subsequent cycling at a higher C/3 rate, the coulomb efficiency was 87%. The Discharge Capacity Retention was 79%.

Example 16

Preparation and Testing of Cell: *GDR(-)// 0.4M Li2812F9H3 and 1 wt% VC in 3:7 EC:DEC//GEN2(+)*

The same procedure was followed as in Example 11, however, a different additive VC was added in 1 % by weight to the electrolyte solution. The initial coulomb efficiency, which directly relates to the irreversible capacity loss at the first charging, was 69% indicating a significant capacity loss for the cell. Upon subsequent cycling, the coulomb efficiency for the second cycle was 92% indicating that the passivation layer was still forming on the second cycle. The coulomb efficiency from the third higher rate cycle was 86%. The Discharge Capacity Retention was 80%.

The data from Examples 11-16 is summarized in Table 2.

Table 2

| Additive Example | 1st Cycle Coulomb Efficiency C/20 | 2nd Cycle Coulomb Efficiency C/20 | 3rd Cycle Coulomb Efficiency C/3 | Discharge Retention |
|---|---|---|---|---|
| 1 wt % $LiPF_6$ Ex.11 | 81% | 100% | 90% | 88% |
| No Additive Comp Ex. 12 | 76% | 97% | 90% | 87% |
| 3 wt % $LiBF_4$ Ex. 13 | 81 % | 98% | 94% | 90% |
| 5 wt % VEC Comp Ex. 14 | 67% | 95% | 72% | 57% |
| 3 wt% LiBOB Ex.15 | 79% | 100% | 87% | 79% |
| 1 wt% VC Ex. 16 | 69% | 92% | 86% | 80% |

Table 2 shows that the coulombic efficiency data from cells correlates well with the CV data in Examples 1-7. The data shows that inorganic additives that were tested provided decreased irreversible capacity loss.

Example 17

*GDR(-)110.4M $Li_2B_{12}FgH_3$ and 1 wt% $LiPF_6$ in 3: 7 EC:DEC//GEN2(+)*

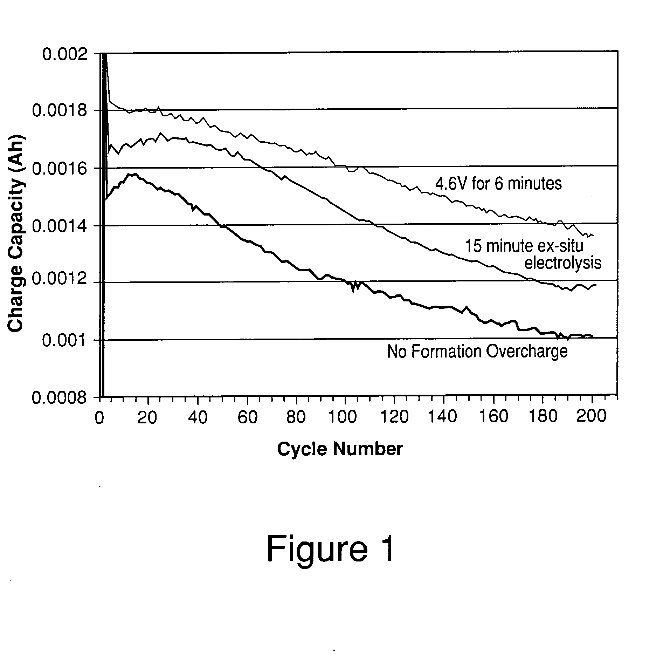

The same procedure was followed as in Example 11; however, in the measurement of battery characteristics the formation cycle consisted of a constant current charge of 0.1 mA (C/20) to a voltage of 4.1V followed by a discharge current of 0.1 mA (C/20) to 3V. Subsequently the cell was charged and discharged at current of 0.7 mA (C/3) between 4.1V and 3V for 102 cycles to investigate the capacity retention. Figure 1 shows the cell capacity (Ah) on the ordinate and the charge/discharge cycle number on the abscissa. The cell capacity maintains a relatively constant level after the initial rise in capacity.

Comparative Example 18

*GDR(-)//0.4M Li2B12F9H3 in 3:7 EC:DEC//GEN2(+)*

The same procedure was followed as in Example 17, however, no $LiPF_6$ was added. Figure 1 shows that after the initial rise in capacity, as was observed in the previous example, the capacity retention decreases more during each successive cycle. This shows that the cycle life of this cell with an additive is better than the cell without an additive.

Cell Examples for Formation Overcharge:

Comparative Example 19

*GDR(-)//0.4M $Li_2B_{12}F_9H_3$ in 3:7 EC:DEC//GEN2(+) No formation overcharge step*

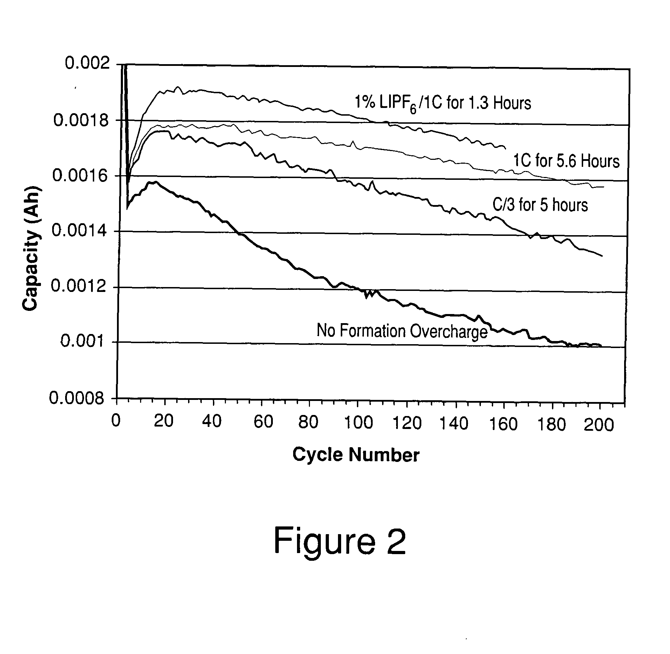

The same procedure was used as in Comparative Example 12 for the electrolyte preparation and preparation of the coin cell battery. The measurement of battery characteristics was the same procedure used in Example 17 for cycle life testing. The formation cycle consisted of a constant current charge of 0.1 mA (C/20) to a voltage of 4.1V followed by a discharge current of 0.1 mA (C/20) to 3V. Subsequently the cell was charged and discharged at a current of 0.7 mA (C/3) between 4.1 V and 3V for 200 cycles to investigate the capacity retention. Figure 2 shows the cell capacity (Ah) on the ordinate and the cycle number on the abscissa. The cell capacity declined steadily after the initial rise in capacity. This cell, without an additive and without overcharging, during the formation cycle had the lowest cell capacity as compared to the Examples 20-22 also shown in Figure 2.

Example 20

*GDR(-)//0.4M $Li_2B_{12}F_9H_3$ in 3:7 EC:DEC//GEN2(+) Overcharge C/3 for 5 hours*

The same procedure was followed as in Comparative Example 19; however, the cell was charged beyond the full charge potential of the cell to the onset potential for oxidation of the $Li_2B_{12}F_9H_3$ salt at a rate of C/3 for 5 hours continuously. The cell was then discharged at C/20 to 3V. Subsequently, the cell was charged and discharged at current of 0.7 mA (C/3) between 4.1V and 3V for 200 cycles to investigate the capacity retention. Figure 2 shows that the cycle capacity for this cell maintains a slower rate of decline as compared to the previous example. The maximum capacity is also relatively higher.

Example 21

*GDR(-)//0.4M $Li_2B_{12}F_9H_3$ in 3: 7 EC:DEC//GEN2(+) Overcharge 1C for 5. 6 hours*

The same procedure was followed as in Comparative Example 19; however, the cell was charged to the onset potential for oxidation of the $Li_2B_{12}F_9H_3$ salt at a rate of 1C for 5.6 hours continuously. The cell was then discharged at C/20 to 3V. Subsequently, the cell was charged and discharged at current of 0.7 mA (1C) between 4.1 V and 3V for 200 cycles to investigate the capacity retention. Figure 2 shows that the cycle capacity for this cell maintains a slower rate of decline as compared to Example 20. The higher overcharging rate for this cell improves the cycle life performance.

Example 22

*GDR(-)110.4M $Li_2B_{12}FgH_3$ and 1% $LiPF_6$ in 3:7 EC:DEC//GEN2(+) Overcharge 1C for 1.3 hours*

This cell was prepared as described in Example 11 with 1 % $LiPF_6$ by weight as the additive. The same procedure was followed as in Example 19; however, the cell was overcharged at a rate of 1C for 1.3 hours continuously. The cell was then discharged at C/20 to 3V. Subsequently, the cell was charged and discharged at a current of 0.7 mA (C/3) between 4.1V and 3V for 200 cycles to investigate the capacity retention. Figure 2 shows that the cycle capacity for this cell maintains a slower rate of decline as compared to Examples 19, 20 and 21. The combination of additive with overcharge formation significantly improves the cycle life behavior of a cell.

The examples and comparative examples show that an additive added to the electrolyte and/or the overcharging step during the formation cycle improve a cell's performance.

Comparative Example 23

*GDR(-)//0.4M $Li_2B_{12}F_9H_3$ in 3:7 EC:DEC //GEN2(+) 15 minute ex-situ electrolysis*

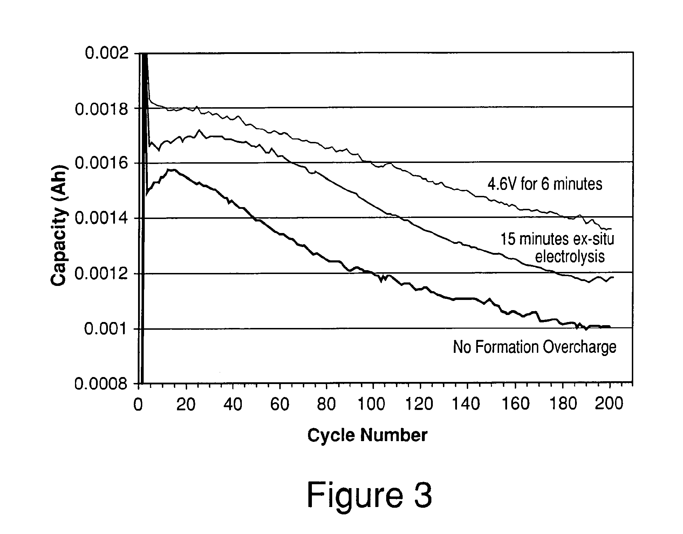

A current density of 1 mA cm$^{-2}$ was applied to a Pt disk working electrode in a 0.4 M Li2B12F9H3 containing EC/DEC (3/7) electrolyte solution. The counter and reference electrodes were lithium foils. After 15 minutes of constant current electrolysis, the electrolyte was used in a 2032 button cell. The same procedure was followed as in example 19. The cell was constant current charged at 0.1 mA (C/20) to a voltage of 4.1V followed by a discharge current of 0.1 mA (C/20) to 3V. Subsequently the cell was charged and discharged at a current of 0.7 mA (C/3) between 4.1V and 3V for 200 cycles to investigate the capacity retention. Figure 3 shows that the cycle capacity of this cell maintains a slower rate of decline as compared to Example 19 where the cell has no formation overcharge. The *ex-situ* 15 minute electrolysis of the electrolyte improves the cycle life performance.

Comparative Example 24

*GDR(-)//0.4M $Li_2B_{12}F_9H_3$ in 3:7 EC:DEC//GEN2(+) Initial 4.6V overcharge for 6 minutes*

The same procedure was followed as in Example 19; however, the cell immediately after assembly was constant voltage charged to 4.6V for 6 minutes. The cell was then discharged at C/20 to 3V. Then the cell was constant current charged at 0.1 mA (C/20) to a voltage of 4.1 V followed by a discharge current of 0.1 mA (C/20) to 3V. Subsequently, the cell was charged and discharged at a current of 0.7 mA (C/3) between 4.1 V and 3V for 200 cycles to investigate the capacity retention. Figure 3 shows that the cycle capacity of this cell maintains a slower rate of decline as compared to Example 19 where the cell has no formation overcharge and the previous example. The initial 4.6V overcharge for 6 minutes improves the cycle life performance.

The invention has been described with reference to particular embodiments, but other embodiments are apparent to persons of skill in the art, and are included within the scope of the claims.

**Claims**

1. An electrolyte having a second cycle reduction current at 0.3 V vs Li/Li$^+$ that is less than the reduction current of the first cycle, said electrolyte comprising a salt which will not electrochemically passivate.

2. An electrolyte having a second cycle reduction current that is less than the reduction current of the first cycle, said electrolyte comprising a salt of the formula:

$$Li_aQ$$

where Q is a borate cluster anion or heteroborate cluster anion, and a is 1 or 2.

3. The electrolyte of claim 1 further comprising at least one additive.

3. The electrolyte of claim 2 further comprising at least one additive.

4. The electrolyte of claim 3 wherein said additive comprises at least one inorganic compound.

5. The electrolyte of claim 3 wherein said additive comprises at least one member selected from the group consisting of boron, phosphorous, sulfur, fluorine, carbon and boron.

6. The electrolyte of claim 3 wherein said additive comprises at least one member selected from the group consisting of lithium hexafluorophosphate ($LiPF_6$), lithium bis-oxalatoborate (LiBOB), lithium perchlorate ($LiClO_4$), lithium hexafluoroarsenate ($LiAsF_6$), lithium trifluoromethanesulfonate ($LiCF_3SO_3$), lithium trifluoromethanesulfonimide ($Li(CF_3SO_2)_2N$, lithium tetrafluoroborate ($LiBF_4$), lithium tetrachloroaluminate ($LiClO_4$), lithium hexafluoroantimonate ($LiSbF_6$), $CO_2$, phosphate esters, borate esters, and water.

7. The electrolyte of claim 3 wherein said additive comprises at least one chelato borate salt.

8. The electrolyte of claim 3 wherein said additive comprises at least one member selected from the group consisting of carbonates, chloroethylene carbonate, vinylene carbonate, vinylethylenecarbonate, sulfites, ethylene sulfite, propane sulfone, propylene sulfite, butyrolactones, phenylethylene carbonate, phenylvinylene carbonate, catechol carbonate, vinyl acetate, vinylethylene carbonate, dimethyl sulfite, fluoroethylene carbonate, trifluoropropylene carbonate, bromo gamma-butyrolactone, and fluoro gamma-butyrolactone.

9. The electrolyte of claim 2 further comprising an additive comprising at least one member selected from the group consisting of boron, phosphorous, sulfur, fluorine and carbon.

10. The electrolyte of claim 2 further comprising an additive, wherein said additive comprises at least one member selected from the group consisting of lithium hexafluorophosphate ($LiPF_6$), lithium bis-oxalatoborate (LiBOB), or other chelatoborate salt, lithium perchlorate ($LiClO_4$), lithium hexafluoroarsenate ($LiAsF_6$), lithium trifluoromethanesulfonate ($LiCF_3SO_3$), lithium trifluoromethanesulfonimide ($Li(CF_3SO_2)_2N$, lithium tetrafluoroborate ($LiBF_4$), lithium tetrachloroaluminate (LiClO4), lithium hexafluoroantimonate ($LiSbF_6$), $CO_2$, phosphate esters, borate esters, and water.

11. A cell comprising a positive electrode, a negative electrode and an electrolyte having a second cycle reduction current at 0.3 V vs Li/Li$^+$ that is less than that of the first cycle, said electrolyte comprising a salt, which is not reduced above 0.3 V vs Li/Li$^+$ and/or will not electrochemically passivate.

12. The cell of claim 11, wherein during said formation cycle of said cell, said cell is overcharged.

13. The cell of claim 11 wherein said cell further comprises an additive that forms a passivation layer on at least one of said electrodes.

14. The cell of claim 12 wherein said cell further comprises at least one additive that forms a passivation layer on at least one of said electrodes.

15. The cell of claim 12 wherein said additive comprises at least one inorganic compound.

16. The cell of claim 12 wherein said additive comprises at least one member selected from the group consisting of boron, phosphorous, sulfur, fluorine and carbon.

**17.** The cell of claim 12 wherein said additive comprises at least one member selected from the group consisting of selected from the group consisting of lithium hexafluorophosphate (LiPF$_6$), lithium bis-oxalatoborate (LiBOB), or other chelatoborate salt, lithium perchlorate (LiClO$_4$), lithium hexafluoroarsenate (LiAsF$_6$), lithium trifluoromethanesulfonate (LiCF$_3$SO$_3$), lithium trifluoromethanesulfonimide (Li(CF$_3$SO$_2$)$_2$N, lithium tetrafluoroborate (LiBF$_4$), lithium tetrachloroaluminate (LiClO4), lithium hexafluoroantimonate (LiSbF$_6$), CO$_2$, phosphate esters, borate esters, and water.

**18.** The cell of claim 13 wherein said additive comprises at least one organic compound wherein said additive is selected from the group consisting of carbonates, chloroethylene carbonate, vinylene carbonate, vinylethylenecarbonate, sulftes, ethylene sulfite, propane sulfone, propylene sulfite, butyrolactones, phenylethylene carbonate, phenylvinylene carbonate, catechol carbonate, vinyl acetate, vinylethylene carbonate, dimethyl sulfite, fluoroethylene carbonate, trifluoropropylene carbonate, bromo gamma-butyrolactone, and fluoro gamma-butyrolactone.

**19.** The cell of claim 12 wherein said additive comprises at least one member selected from the group consisting of lithium hexafluorophosphate (LiPF$_6$), lithium bis-oxalatoborate (LiBOB), or other chelatoborate salt, lithium perchlorate (LiClO$_4$), lithium hexafluoroarsenate (LiAsF$_6$), lithium trifluoromethanesulfonate (LiCF$_3$SO$_3$), lithium trifluoromethanesulfonimide (Li(CF$_3$SO$_2$)$_2$N, lithium tetrafluoroborate (LiBF$_4$), lithium tetrachloroaluminate (LiClO4), lithium hexafluoroantimonate (LiSbF$_6$), CO$_2$, phosphate esters, borate esters, and water.

**20.** A method of forming an SEI layer in a cell comprising a positive electrode, a negative electrode and an electrolyte, said method comprising the step of overcharging said cell during the formation cycle.

**21.** The method of claim 14, wherein said cell further comprises an additive to form a passivation layer on at least one of said electrodes.

**22.** A cell comprising a salt of the formula:

$$Li_aQ$$

where Q is a borate cluster anion or heteroborate cluster anion, and a is 1 or 2, wherein said cell undergoes a formation cycle comprising an overcharge step.

**23.** A cell comprising a salt of the formula:

$$Li_aQ$$

where Q is a borate cluster anion or heteroborate cluster anion, and a is 1 or 2, further comprising an additive.

**24.** An electrolyte comprising a salt of the formula:

$$Li_aQ$$

where Q is a borate cluster anion or heteroborate cluster anion, and a is 1 or 2, and at least one partially oxidized compound.

Figure 1

Figure 2

Figure 3

**European Patent Office**

## EUROPEAN SEARCH REPORT

Application Number

EP 06 00 0139

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X, L | EP 1 513 215 A (AIR PRODUCTS AND CHEMICALS, INC) 9 March 2005 (2005-03-09) *Document which casts doubt on the priority claimed* * example 9 * ----- | 1-24 | H01M10/40 |
| P,X, L | EP 1 587 158 A (AIR PRODUCTS AND CHEMICALS, INC; AMINE, KHALIL; LIU, JUN) 19 October 2005 (2005-10-19) *Document which casts doubt on the priority claimed* * claim 1 * ----- | 1-24 | |

TECHNICAL FIELDS
SEARCHED (IPC)

H01M

The present search report has been drawn up for all claims

| Place of search | Date of completion of the search | Examiner |
|---|---|---|
| The Hague | 7 April 2006 | Gregg, N |

EPO FORM 1503 03.82 (P04C01)

**ANNEX TO THE EUROPEAN SEARCH REPORT
ON EUROPEAN PATENT APPLICATION NO.**                    EP 06 00 0139

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2006

| Patent document cited in search report | | Publication date | Patent family member(s) | | Publication date |
|---|---|---|---|---|---|
| EP 1513215 | A | 09-03-2005 | BR | 0404899 A | 24-05-2005 |
| | | | CA | 2479589 A1 | 04-03-2005 |
| | | | CN | 1601802 A | 30-03-2005 |
| | | | JP | 2005158695 A | 16-06-2005 |
| | | | MX | PA04008564 A | 31-03-2005 |
| EP 1587158 | A | 19-10-2005 | JP | 2005302727 A | 27-10-2005 |
| | | | US | 2005227143 A1 | 13-10-2005 |

EPO FORM P0459

For more details about this annex : see Official Journal of the European Patent Office, No. 12/82